# EUROPÄISCHE PATENTSCHRIFT

(11) **EP 0 954 397 B1**
(45) Veröffentlichungstag und Bekanntmachung des Hinweises auf die Patenterteilung: **30.05.2001**
(21) Anmeldenummer: 98906884.6
(22) Anmeldetag: 23.01.1998
(51) Int. Cl.: B21D 53/10

(54) **VERFAHREN UND WERKZEUG ZUM HERSTELLEN VON FLACHLAGERSCHALEN**
PROCESS AND TOOL FOR MANUFACTURING FLAT BEARING SHELLS
PROCEDE ET OUTIL DE FABRICATION DE COQUILLES DE COUSSINET PLATES

(30) Priorität: 24.01.1997 DE 19702445
(43) Veröffentlichungstag der Anmeldung: 10.11.1999
(73) Patentinhaber: KS Gleitlager GmbH, 68789 St. Leon-Rot (DE)
(72) Erfinder: KALDENHOFF, Kurt, D-12307 Berlin (DE); MÄHRLEIN, Matthias, D-12277 Berlin (DE); HOPPMANN, Ralf, D-26842 Ostrhauderfehn (DE); HERMANNS, Hubert, D-26871 Papenburg (DE)
(74) Vertreter: Dreiss, Fuhlendorf, Steimle & Becker
(86) Internationale Anmeldenummer: EP9800347
(87) Internationale Veröffentlichungsnummer: WO9832554

(56) Entgegenhaltungen:
- US-A- 4 351 175
- US-A- 4 845 817
- US-A- 5 199 170

## Beschreibung

Die Erfindung betrifft ein Verfahren sowie ein Werkzeug nach dem Oberbegriff von Anspruch 1 bzw. Anspruch 10 zum Herstellen von Flachlagerschalen, wobei von einem Bandmaterial Lagerschalenabschnitte abgetrennt werden, diese Abschnitte im wesentlichen halbkreisförmig gebogen, gegebenenfalls die Übergangsbereiche von den Trennflächen zu der dem Gleitpartner zugewandten Innenseite angefast sowie Außen- und Innenseite und die Trennflächen der so gebildeten Lagerschale kalibriert werden. Nächsthommender Stand der Technik ist US-A-5 199 170.

Das Kalibrieren der Außenseite der Lagerschale auf Umfangslänge und das Kalibrieren der Trennflächen erfolgt bislang durch Räumen der Trennflächen. Die Trennflächen werden also derart spanabhebend bearbeitet, dass die erwünschte Umfangslänge auf der Außenseite der Lagerschale erreicht wird. Hierfür wird eine Einrichtung für spanabhebende Bearbeitung benötigt. Das Kalibrieren der Innenseite der Lagerschale erfolgt üblicherweise kurz bevor die schlussendliche Abmessung der fertigen Lagerschale geprüft wird, indem eine Räumnadel in Richtung der Rotationsachse des späteren Gleitpartners an der Innenseite der Lagerschale vorbeibewegt wird.

Der vorliegenden Erfindung liegt daher die Aufgabe zugrunde, ein Verfahren der eingangs erwähnten Art dahingehend zu verbessern, dass das Kalibrieren der Außenseite und der Trennflächen der Flachlagerschalen prozesstechnisch einfacherer Weise und kostengünstige durchführbar ist als dies bislang der Fall ist.

Diese Aufgabe wird erfindungsgemäß durch ein Verfahren nach Anspruch 1 gelöst.

Bei der Anwendung des erfindungsgemäßen Verfahrens wird also auf ein Räumen der Trennflächen verzichtet, und es wird stattdessen zum Kalibrieren der Außenseite der Lagerschale auf Umfangslänge und zum Kalibrieren der Trennflächen der Lagerschale ein Pressvorgang durchgeführt. Hierbei wird die betreffende Lagerschale durch Stauchen der Trennflächen gegen eine Presslagerfläche deformiert, deren Innenfläche genau die herzustellende Außenkontur der Lagerschale aufweist. Die Trennflächen werden also derart gestaucht, dass die herzustellende Lagerschale die erwünschte Umfangslänge aufweist. Das Kalibrieren der Innenseite der Lagerschale erfolgt in einem späteren Verfahrensschritt durch einen Räumprozess.

Um die Trennflächen einer bekannten Lagerschale im Übergangsbereich zur Innenseite anzufasen und die Lagerschale auf Umfangslänge zu kalibrieren, sind verschiedene Werkzeuge und demzufolge verschiedene Bearbeitungsschritte und -positionen erforderlich. In Weiterbildung der Erfindung von besonderer Bedeutung wird vorgeschlagen, gleichzeitig mit dem Stauchen der Trennflächen im Bereich des Übergangs von den Trennflächen zur Innenseite der Lagerschale Fasen zu prägen. Das Kalibrieren der Lagerschale auf Umfangslänge sowie das Kalibrieren der Trennflächen und vorzugsweise auch die Formgebung des Übergangsbereichs von den Trennflächen zur Innenseite der Lagerschale wird also in ein- und demselben Pressvorgang in einem einzigen Verfahrensschritt ausgeführt. Das hierfür zu verwendende Werkzeug weist zum Stauchen der Trennflächen bzw des Übergangsbereichs von den Trennflächen zur Innenseite der Lagerschalen eine heb- und senkbare Pressbrücke auf, welche die Lagerschale von Trennfläche zu Trennfläche überspannt und nur zur Ausbildung des Übergangsbereichs von den Trennflächen zur Innenseite der Lagerschale in diese eingreift.

Um ein unkontrolliertes Fließen der Lagerschale während des Press- bzw. Stauchvorgangs zu verhindern, werden die halbkreisförmig vorgebogenen Lagerschalenabschnitte während des Pressvorgangs an ihren die Lagerbreite begrenzenden Stirnseiten in dem Presswerkstück gestützt. Es werden also innerhalb des Presswerkzeugs Stützanschläge in Anlage an die genannten Stirnseiten gebracht, und zwar unmittelbar vor oder gleichzeitig mit dem Niederfahren der Pressbrücke gegen die Trennflächen der Lagerschale, so dass während des Pressvorgangs die Breite der Lagerschale nicht vergrößert wird.

Nach einer besonders vorteilhaften Ausführungsform der Erfindung wird beim Pressvorgang eine radiale Nase in eine Ausnehmung des Presswerkzeugs ausgeklinkt. Diese Nasen dienen dazu, die Lagerschalen innerhalb einer Lagerstelle unverschieblich bzw. unverdrehbar zu halten und sind ansich bekannt. Sie werden jedoch üblicherweise in einem separaten Verfahrensschritt ausgestanzt bzw. ausgeklinkt.

In Weiterbildung des vorstehend beschriebenen Erfindungsgedankens wird die Schale nach dem Ausklinken der Nase durch Drücken oder Tippen auf die der Nase gegenüberliegende Trennfläche derart innerhalb des Presswerkzeugs gedreht, dass sie aus der Ausnehmung des Presswerkzeugs freikommt und nach dem Öffnen des Presswerkzeugs in Längsrichtung, d.h. in Rotationsrichtung eines späteren Gleitpartners der Lagerschale aus dem Presswerkzeug ausgeschoben werden kann. Würde auf das Drehen der Lagerschale in Umfangsrichtung verzichtet, so könnte die Lagerschale nicht in Längsrichtung aus dem Presswerkzeug ausgeschoben werden, da sie solchenfalls mit ihrer Nase gegen die Begrenzung der Ausnehmung des Presswerkzeugs stoßen würde. Die Lagerschale müsste dann in geeigneter Weise angehoben und sodann aus dem Presswerkzeug entnommen werden, was ansich ebenfalls denkbar wäre.

Im Anschluss an das Ausklinken einer radialen Nase in einem bekannten Herstellungsverfahren müssen die Flanken zwischen dem ausgeklinkten Nasenabschnitt und der Innenseite der Lagerschale freigefräst werden, um zu verhindern, dass störende Grate zu einer vorzeitigen Zerstörung des Lagers führen. - Im Zuge der Anwendung des erfindungsgemäßen Verfahrens ist es hingegen möglich, beim Press- bzw. Stauchvorgang die erwünschte erweiterte Formgebung im Bereich der Nasenausklinkung auf der Innenseite der Lagerschale zu formen, so dass auf einen weiteren spanabhebenden Bearbeitungsschritt verzichtet werden kann.

Bei der Herstellung gattungsgemäßer Flachlagerschalen wird die Ölnut bislang nach dem Abtrennen der Lagerschalenabschnitte vom Bandmaterial, und nachdem die Lagerschalenabschnitte auf Halbkreisform gebogen wurden, gefräst. Es hat sich nun gezeigt, dass die Ölnut entgegen seitheriger Vorstellung und Praxis vor dem Trennen des Bandmaterials eingefräst werden kann. Man war seither davon ausgegangen, dass ein Abtrennen der Lagerschalenabschnitte von einem Bandmaterial, in welches bereits die Ölnut in Längsrichtung eingefräst wurde, nicht möglich sei, da es solchenfalls zu einer Verquetschung der Flanken der Ölnut komme, wenn mittels eines Stanzwerkzeugs der Lagerschalenabschnitt vom Band abgeschert wird. Es hat sich jedoch als problemlos und vorteilhaft erwiesen, wenn die Lagerschalenabschnitte unter Verwendung eines komplementär zur Querschnittskontur des Bandmaterials nach dem Fräsen der Ölnut ausgebildeten Stanzstempels abgetrennt werden. Hierbei wird ein der Dicke des Stanzstempels entsprechender Schnittabfall in Kauf genommen, um zu verhindern, dass bei den abgetrennten Lagerschalenabschnitten ein Wechselgrat entsteht. Hierfür wird ein zwei Schneidkanten aufweisendes Untermesser verwendet und der Stanzstempel zwischen diesen Schneidkanten hindurchgeführt, so dass ein der Dicke des Stanzstempels entsprechender Schnittabfall erzeugt wird.

Das Abtrennen der Lagerschalenabschnitte vom Bandmaterial wird in bevorzugter Weise so durchgeführt, dass beim Abscheren an der in Stanzrichtung unteren Seite des Bandmaterials kein über die Unterseite, d.h. die spätere Außenseite der Lagerschale, überstehender Grat gebildet wird. Um dies zu erreichen, wird ein Stanzwerkzeug verwendet, dessen Untermesser in Richtung auf den Stanzstempel nach oben strebende Schneidkanten aufweist.

Im Hinblick auf eine vorteilhafte Abfolge der verschiedenen Herstellungsschritte wird ein gegebenenfalls vorzusehendes Ölloch in einem späteren Verfahrensschritt nach dem Kalibrieren von Außenseite und Trennflächen und vor dem Kalibrieren der Innenseite gestanzt.

Der vorliegenden Erfindung liegt desweiteren die Aufgabe zugrunde, ein Werkzeug zum Durchführen des erfindungsgemäßen Verfahrens bereitzustellen.

Diese weitere Aufgabe wird erfindungsgemäß gelöst durch ein Presswerkzeug nach Anspruch 10.

Mit dem erfindungsgemäßen Presswerkzeug lassen sich in einem einzigen Verfahrensschritt die Umfangslänge der Lagerschale sowie die Trennflächen kalibrieren, wobei gleichzeitig die jeweilige Innenfase im Übergangsbereich der Trennflächen zu der Innenseite der Lagerschale in gewünschter Weise geformt wird. Durch Positionieren oder Anlegen der seitlichen Werkzeugflanken an die beiden in entgegengesetzte Richtungen weisenden Stirnseiten der herzustellenden Lagerschale lässt sich ein unkontrolliertes Fließen des Lagerschalenmaterials während des Pressvorgangs verhindern. Hierdurch kann also die Lagerschalenbreite definiert werden. Hierfür ist wenigstens eine der seitlichen Werkzeugflanken in Anlage an eine die Lagerschalenbreite begrenzende Stirnseite der Lagerschale bringbar.

Vorteilhafterweise ist das erfindungsgemäße Presswerkzeug gekennzeichnet durch eine Vorstufe mit einem halbkreisförmigen Biegestempel zum Biegen der vom Bandmaterial abgetrennten Lagerschalenabschnitte auf Halbkreis form.

In Weiterbildung dieses Erfindungsgedankens ist eine Verschiebeeinrichtung zum Verbringen des gebogenen Lagerschalenabschnitts von der Biege-Vorstufe zur Kalibrier-Stufe vorgesehen.

Weitere Merkmale, Einzelheiten und Vorteile der Erfindung ergeben sich aus der zeichnerischen Darstellung und nachfolgenden Beschreibung einer vorteilhaften Ausführungsform des erfindungsgemäßen Presswerkzeugs sowie der Abfolge der Verfahrensschritte zum Herstellen einer Flachlagerschale aus einem Bandmaterial. In der Zeichnung zeigt:
- Figur 1: ein Stanzwerkzeug zum Trennen eines Bandmaterials in Lagerschalenabschnitte in einer längsgeschnittenen Ansicht;
- Figur 2: das Stanzwerkzeug nach Figur 1 in einer quergeschnittenen Ansicht;
- Figur 3: eine Ansicht eines des Bandmaterials und eines abgetrennten Lagerschalenabschnitts;
- Figur 4: eine Ansicht eines Preßwerkzeugs zum Bearbeiten der gebogenen Lagerschalenabschnitte;
- Figur 5: eine Ansicht des Preßwerkzeugs nach Fig. 4 gesehen in Richtung der Pfeile V-V in Fig. 4; und
- Figur 6: ein vergrößertes Detail aus Fig. 4.

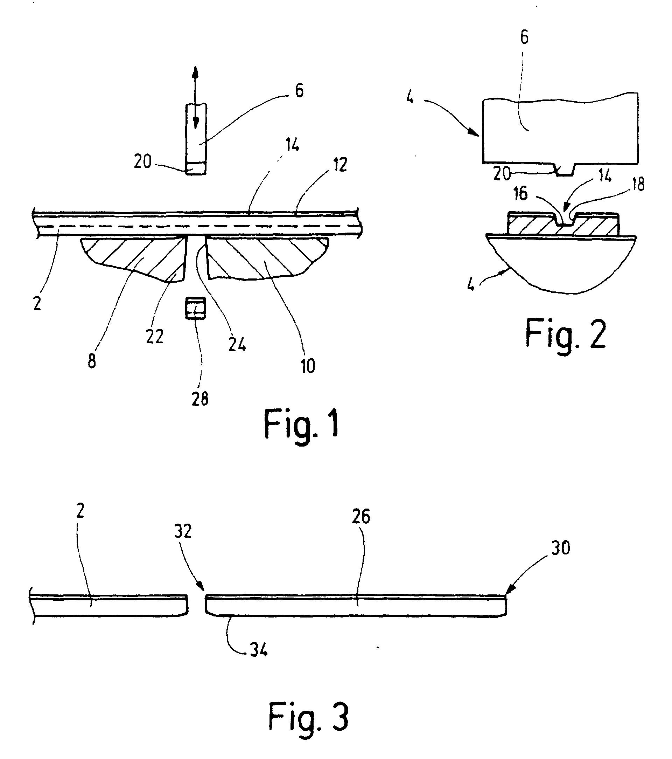

Die Figuren 1 bis 3 zeigen den Vorgang des Abtrennens eines Lagerschalenabschnitts vom Bandmaterial sowie ein hierzu verwendetes Stanzwerkzeug. Mit dem Bezugszeichen 2 ist ein von einer nicht dargestellten Bandrolle kontinuierlich abgewickeltes 2-komponentiges Bandmaterial bezeichnet, von dem mittels des dargestellten Stanzwerkzeugs 4 kontinuierlich Lagerschalenabschnitte abgetrennt werden. Das Stanzwerkzeug 4 umfasst einen ein Obermesser bildenden Stanzstempel 6 sowie zwei Untermesser 8, 10, zwischen denen der Stanzstempel 6 zum Abtrennen eines Lagerschalenabschnitts hindurchgeführt wird. Der Stanzstempel 6 ist komplementär zur Querschnittskontur des Bandmaterials 2 auf seiner dem Stanzstempel 6 zugewandten Seite ausgebildet. Bevor das Band zum Trennen in Lagerschalenabschnitte dem Stanzwerkzeug zugeführt wird, wird auf der dem späteren Gleitpartner zugewandten Oberseite 12 eine in Längsrichtung erstreckte Ölnut 14, durch Fräsen, Strählen oder Räumen eingebracht. Die Ölnut 14 weist einen ebenen und parallel zur Oberseite verlaufenden Nutboden 16 und zur Oberseite 12 geneigt verlaufende Nutflanken 18 auf. Die Struktur des Stanzstempels 6, d.h. des Obermessers, entspricht nun genau der Formgebung bzw. Ausbildung dieser Nut 14. Der Stanzstempel 6 weist also einen komplementär zur Querschnittskontur der Ölnut 14 ausgebildeten Vorsprung 20 auf. Durch eine derartige Ausbildung des Obermessers ist es möglich geworden, die Ölnut 14 kontinuierlich in das Bandmaterial 2 einzubringen, bevor die Lagerschalenabschnitte vom Bandmaterial abgetrennt werden.

Die beiden Untermesser 8, 10 weisen je eine quer zur Längs- bzw. Transportrichtung des Bandmaterials 2 verlaufende Schneidkante 22 bzw. 24 auf. Diese Schneidkanten 22, 24 sind in Richtung auf den Stanzstempel 6 nach oben strebend ausgebildet. Beim Abtrennen eines Lagerschalenabschnitts 26 vom Bandmaterial 2 wird der Stanzstempel 2 nach unten gefahren und zwischen den Schneidkanten 22, 24 der Untermesser 8, 10 hindurchbewegt, so dass beim Abtrennen des Lagerschalenabschnitts 26 ein der Breite des Stanzstempels entsprechendes Abfallstück 28 erzeugt wird. Hierdurch wird das Entstehen eines Wechselgrats bei den abgetrennten Lagerabschnitten 26 verhindert, d.h. es entsteht an der Oberseite 12 des Lagerschalenabschnitts kein am vorderen Ende nach unten und am hinteren Ende nach oben strebender Schneidgrat, sondern die vordere und hintere Trennkante 30 bzw. 32 eines jeweiligen Lagerschalenabschnitts 26 ist in Bewegungsrichtung des Stanzstempels 6 nach unten gezogen. Durch die vorstehend beschriebene Ausbildung der Schneidkanten 22, 24 der Untermesser 8, 10 wird erreicht, dass kein über die der Oberseite 12 des jeweiligen Lagerschalenabschnitts 26 gegenüberliegende Unterseite 34 vorstehender Schneidgrat gebildet wird, der aufwendig entfernt werden müsste oder sich beim Einsetzen der Lagerschale in eine Lagerstelle verhängnisvoll auswirken kann. Beim Niedergehen des Stanzstempels 6 wird das Abfallstück 28 also frühzeitig abgeschert, so dass ein auch in diesem Fall gebildeter Schneidgrat nicht über die Unterseite 34 vorsteht.

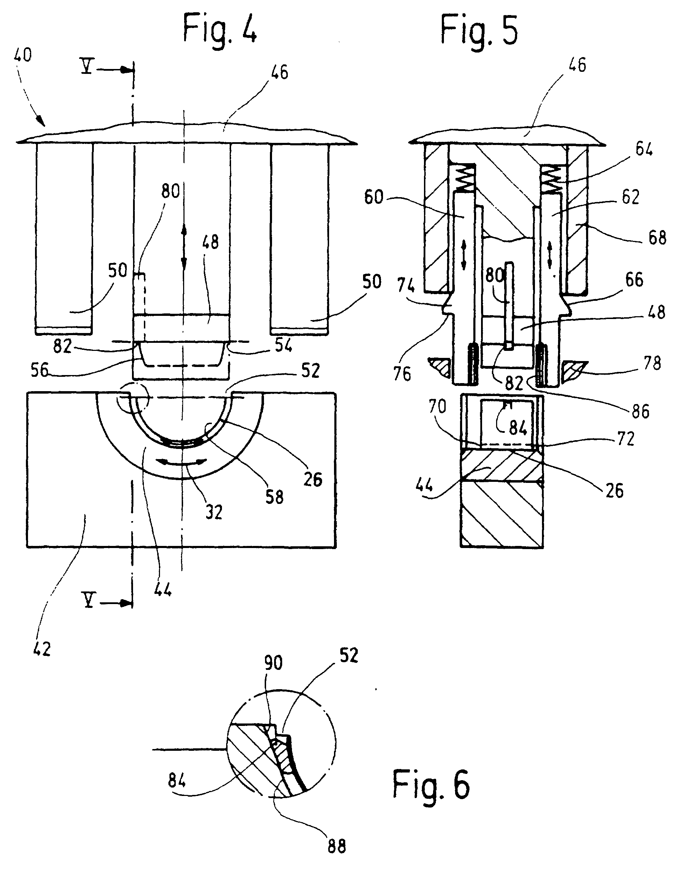

In einem nachfolgenden Verfahrensschritt werden die Lagerschalenabschnitte 26 im Wesentlichen halbkreisförmig gebogen. Dies findet in einer nicht dargestellten Biegevorstufe eines in den Figuren 4 bis 6 dargestellten Presswerkzeugs 40 statt. Nach dem Biegen auf Halbkreisform werden die Lagerschalenabschnitte 26 in die in den Figuren 4 und 5 dargestellte Arbeitsposition des Presswerkzeugs vorzugsweise verschoben, in der dann die Außenseite sowie die Trennflächen der halbkreisförmig gebogenen Lagerschalenabschnitte 26 kalibriert werden.

Das Presswerkzeug 40 umfasst einen Grundaufnahmekörper 42, welcher ein der herzustellenden Außenform der Lagerschale entsprechendes Pressgesenk 44 für die Lagerschalenabschnitte 26 trägt. Über ein andeutungsweise dargestelltes Pressenoberteil 46 ist eine Pressbrücke 48 im Bezug auf das Pressgesenk 44 heb- und senkbar. Die untere Endposition wird über an den Grundaufnahmekörper 42 anstoßende Anschlagblöcke 50 definiert bzw. eingestellt.

Die Pressbrücke 48 weist gegen Trennflächen 52 der Lagerschalenabschnitte 26 anlegbare Presslagerflächen 54 auf. Die Presslagerflächen 54 gehen in einen in die Lagerschale 26 eingreifenden Materialleitabschnitt 56 über. Die genaue Formgebung der Presslagerflächen 54 im Übergangsbereich zum Materialleitabschnitt 56 entspricht der herzustellenden Innenphase im Übergang von den Trennflächen 52 zur Innenseite 58 der Lagerschale 26.

Wie aus der Figur 5 ersichtlich sind beidseits der Pressbrücke 48 seitliche Werkzeugflanken 60 und 62 vorgesehen, die zusammen mit dem Werkzeugoberteil 46 heb- und senkbar sind. Die Werkzeugflanken 60, 62 sind über Federmittel an dem Pressenoberteil 46 gehalten und in Stellrichtung der Pressbrücke 48 bewegbar. Die Werkzeugflanken 60, 62 weisen nachfolgend zu erläuternde Zustellschrägen 66 auf, welche beim Betrieb des Presswerkzeugs 40 mit Stellmitteln 68 derart zusammenwirken, dass sie quer zur Schließbewegung des Werkzeugs gegen seitliche Flanken 70, 72 der Lagerschalenabschnitte 26 anlegbar sind. Die jeweilige Zuführschräge 66 ist von einem rampenförmig nach außen laufenden Vorsprung 74 der Werkzeugflanken 60, 62 gebildet, dessen senkrecht zurückführende Rampenflanke 76 eine axiale Anschlagfläche 76 für die seitlichen Werkzeugflanken 60, 68 beim Schließen des Presswerkzeugs bildet. Die axiale Anschlagfläche 76 stößt dabei gegen einen teilweise angedeuteten Tiefenanschlag 78, der dem Grundaufnahmekörper zuzuordnen ist.

An der in Figur 4 linken Seite der Pressbrücke 48 ist ein zusätzlicher Presswerkzeugstempel 80 vorgesehen, welcher über die Presslagerfläche 54 in der Form eines keilförmigen Press- bzw. Stanzvorsprungs 82 vorsteht. Der Presswerkzeugstempel 80 bzw. der keilförmige Vorsprung 82 dienen zum Ausklinken einer in der Figur 6 dargestellten radialen Nase 84.

Die Bearbeitung der halbkreisförmig gebogenen Lagerschalenabschnitte 26 in dem Presswerkzeug 40 funktioniert folgendermaßen: ein Lagerschalenabschnitt 26 wird von der Biegevorstufe in die in den Figuren 4 und 5 dargestellte Bearbeitungsposition des Presswerkzeugs 40 verschoben. Sodann wird das Pressenoberteil 46 in Richtung auf das Pressgesenk 44 abgesenkt. Hierbei schlägt zuerst die axiale Anschlagfläche 76 gegen den Tiefenanschlag 78 an und begrenzt hierdurch die Bewegung der seitlichen Werkzeugflanken 60, 62 (siehe Figur 5). Bei weiterem Absenken des Pressenoberteils 46 gleiten die Stellmittel 68 über die jeweilige Zustellschräge 66 der seitlichen Werkzeugflanken 60, 62 und bewegen diese quer zur Hubrichtung aufeinander zu, bis sie an die seitlichen Flanken 70, 72 der Lagerschale 26 mit ihrem Anlageabschnitt 86 anliegen und somit die Breite der herzustellenden Lagerschale definieren. Gleichzeitig oder wenig später mit dem endgültigen Fixieren der Breite der Lagerschale 26 setzt die Pressbrücke 48 mit ihren beiden Presslagerflächen 54 auf die beiden Trennflächen 52 der Lagerschale 26 auf und staucht diese Trennflächen 52 bzw die Lagerschale 26. Über diesen Stauchvorgang beim Niedergehen der Pressbrücke 48 wird die Außenseite 88 der Lagerschale 26 auf Umfangslänge kalibriert und es werden gleichzeitig die Trennflächen 52 auf ihre endgültige Form gebracht, ohne dass eine weitere Trennflächenbearbeitung etwa durch Räumen der Trennflächen erforderlich wird. Die Bewegung der Pressbrücke 48 wird durch Anstoßen der Anschläge 50 gegen den Grundaufnahmekörper 42 des Presswerkzeugs 40 gestoppt. Die Lagerschale 26 weist nun ihre endgültige Umfangslänge auf. Bei diesem Stauchprozess wird Material der Lagerschale 26 in Umfangsrichtung der Lagerschale verdrängt. Dass dies nicht in unkontrollierter Weise geschieht wird durch den Materialleitabschnitt im Übergangsbereich der Presslagerflächen 54 zur Innenseite der Lagerschale erreicht und dadurch, dass während des Stauchens der Trennflächen 52 die seitlichen Werkzeugflanken 60, 62 die Lagerschale 26 stützen und die schlussendlich erwünschte Lagerschalenbreite genau definieren.

Beim Kalibrieren der Außenseite 88 bzw. der Trennflächen 52 durch den vorstehend beschriebenen Stauchprozess wird desweiteren durch den keilförmigen Stanzvorsprung 82 des zusätzlichen Presswerkzeugstempels 80 die radiale Nase 84 in eine zu diesem Zweck vorgesehene radiale Ausnehmung 90 in dem Pressgesenk 44 ausgeklinkt. Wird die radiale Nase 84 in dieser bevorzugten Weise beim Kalibrieren der Außenseite 88 und der Trennflächen 52 der Lagerschale 26 ausgeklinkt, so kann auf ein Freifräsen der ausgeklinkten Nase von innen verzichtet werden, da diese Formgebung bereits beim Ausklinken durch das Presswerkzeug ausgebildet werden kann.

Zum Ausschieben der Gleitlagerschale 26 aus der dargstellten Bearbeitungsposition innerhalb des Presswerkzeugs 40 wird auf diejenige Trennfläche 52, welche der Nase 84 gegenüberliegt mittels eines schwenkhebelartigen Drückers o.dgl. in Umfangsrichtung 92 ein geringfügiger Stellimpuls ausgeübt, so dass sich die Lagerschale 26 in Umfangsrichtung 92 gegenüber dem Pressgesenk 44 derart verdreht, dass die radiale Nase 84 aus der Ausnehmung 90 freikommt, so dass die Lagerschale 26 aus dem Pressgesenk 44 von einem Schieber ausgeschoben werden kann.

In nachfolgenden Bearbeitungsschritten wird nun ggf. noch ein Ölloch eingebracht. Schließlich braucht lediglich noch die Innenseite in an sich bekannter Weise unter Verwendung einer in axialer Richtung hindurchbewegten Räumnadel kalibriert zu werden.

## Patentansprüche

1. Verfahren zum Herstellen von Flachlagerschalen, wobei von einem Bandmaterial (2) Lagerschalenabschnitte (26) abgetrennt werden, diese Abschnitte im wesentlichen halbkreisförmig gebogen, sowie Außen- und Innenseite (88, 58) und die Trennflächen (52) der so gebildeten Lagerschale kalibriert werden, wobei die Außenseite (88) sowie die Trennflächen (52) der auf Halbkreisform gebogenen Lagerschalenabschnitte (26) durch Stauchen der Trennflächen (52) in einem Presswerkzeug (40) kalibriert werden, **dadurch gekennzeichnet,** dass zum Abtrennen der Lagerschalenabschnitte (26) vom Bandmaterial (2) ein zwei Schneidkanten (22, 24) aufweisendes Untermesser (8, 10) verwendet wird, zwischen denen der Stanzstempel (6) hindurchgeführt wird.

2. Verfahren nach Anspruch 1, dadurch gekennzeichnet, dass die Schneidkanten (22, 24) des verwandten Untermessers (8, 10) in Richtung auf den Stanzstempel (6) nach oben streben, so dass beim Abscheren an der in Stanzrichtung unteren Seite (34) des Bandmaterials (2) kein über die Unterseite (34) des Bandmaterials überstehender Grat gebildet wird.

3. Verfahren nach Anspruch 1 oder 2, dadurch gekennzeichnet, dass beim Stauchen der Trennflachen (52) gleichzeitig im Bereich des Übergangs von den Trennflächen (52) zur Innenseite der Lagerschalen Fasen geprägt werden.

4. Verfahren nach einem der vorstehenden Ansprüche, dadurch gekennzeichnet, dass die gebogenen Lagerschalenabschnitte (26) während des Pressvorgangs beidseits ihrer Längsrichtung in dem Biegepreßwerkzeug gestützt werden.

5. Verfahren nach einem der vorstehenden Ansprüche, dadurch gekennzeichnet, dass beim Stauchen eine radiale Nase (84) in eine Ausnehmung (90) des Preßwerkzeugs (40) ausgeklinkt wird.

6. Verfahren nach Anspruch 5, dadurch gekennzeichnet, dass die Schale nach dem Ausklinken der Nase (84) durch Drücken auf die der Nase (84) gegenüberliegende Trennfläche (52) derart gedreht wird, dass sie aus der Ausnehmung (90) des Preßwerkzeugs (40) freikommt und nach Öffnen des Preßwerkzeugs ausgeschoben werden kann.

7. Verfahren nach einem der vorstehenden Ansprüche, dadurch gekennzeichnet, dass die Ölnut (14) vor dem Trennen des Bandmaterials (2) gefräst wird.

8. Verfahren nach Anspruch 7, dadurch gekennzeichnet, dass die Lagerschalenabschnitte (26) unter Verwendung eines komplementär zur Querschnittskontur des Bandmaterials (2) nach dem Fräsen der Ölnut (14) auegebildeten Stanzstempels (6) abgetrennt werden.

9. Verfahren nach einem der vorstehenden Ansprüche, dadurch gekennzeichnet, dass das Ölloch in einem späteren Verfahrensschritt nach dem Kalibrieren von Außenseite (88) und Trennflächen (52) und vor dem Kalibrieren der Innenseite (58) gestanzt wird.

10. Stanzwerkzeug (4) und Preßwerkzeug (40) zum Herstellen von Flachlagerschalen zum Durchführen des Verfahrens nach einem oder mehreren der vorstehenden Ansprüche, mit einem die Umfangsform der herzustellenden Lagerschale aufweisenden Pressgesenk (44) und einer gegen das Pressgesenk (44) heb- und senkbaren Pressbrücke (48) mit komplementär zur jeweiligen Form der herzustellenden Trennfläche (52) im jeweiligen Übergangsbereich der Trennflächen (52) zu der Innenseite (58) der Lagerschale ausgebildeten Presslagerfläche (54), welche gegen die Trennflächen (52) einer in das Pressgesenk (44) eingelegten Lagerschale (26) drückbar ist, und mit seitlichen Werkzeugflanken (60, 62) zum Stützen und Definieren der Lagerschalenbreite beim Preasvorgang, und mit einem Stanzstempel (6) und einem Untermesser, **dadurch gekennzeichnet,** dass das Untermesser zwei Schneidkanten (22, 24) aufweist, zwischen denen der Stanzstempel (6) hindurchgeführt wird.

11. Stanzwerkzeug und Presswerkzeug nach Anspruch 10, dadurch gekennzeichnet, dass das die Schneidkanten (22, 24) des Untermessers (8, 10) in Richtung auf den Stanzstempel (6) nach oben streben, so dass beim Abscheren an der in Stanzrichtung unteren Seite (34) des Bandmaterials (2) kein über die Unterseite (34) des Bandmaterials überstehender Grat gebildet wird.

12. Stanzwerkzeug und Presswerkzeug nach Anspruch 11, dadurch gekennzeichnet, dass wenigstens eine der seitlichen Werkzeugflanken (60, 62) in Anlage an eine seitliche Stirnseite (70, 72) der Lagerschale bringbar ist.

13. Stanzwerkzeug und Presswerkzeug nach Anspruch 10, 11 oder 12, gekennzeichnet durch eine Zustellschräge (66), durch welche wenigstens eine der seitlichen Werkzeugflanken (60, 62) quer zur Stellrichtung der Preßbrücke (48) in Anlage an eine seitliche Stirnseite (70, 72) der Lagerschale bringbar ist.

14. Stanzwerkzeug und Presswerkzeug nach Anspruch 13, dadurch gekennzeichnet, dass die seitlichen Werkzeugflanken (60, 62) in Stellrichtung der Preßbrücke (48) gegen ein die Preßbrücke hebendes und senkendes Pressenoberteil (46) federbelastet vorgespannt ist.

15. Stanzwerkzeug und Presswerkzeug nach einem der Ansprüche 10 bis 14, gekennzeichnet durch eine Vorstufe mit einem halbkreisförmigen Biegestempel zum Biegen der vom Bandmaterial (2) abgetrennten Lagerschalenabschnitte (25) auf Halbkreisform.

16. Stanzwerkzeug und Presswerkzeug nach Anspruch 15, gekennzeichnet durch eine Verschiebeeinrichtung zum Verbringen des gebogenen Lagerschalenabschnitts von der Biege-Vorstufe zur Kalibrier-Stufe.

## Claims

1. Process for the production of flat bearing shells, in which bearing shell sections (26) are cut from a strip material (2), these sections are bent into a substantially semi-circular shape, and the outer and inner faces (88, 58) and the parting surfaces (52) of the bearing shell formed in this manner are calibrated, the outer face (88) and the parting surfaces (52) of the bearing shell sections (26) bent into a semi-circular shape being calibrated by upsetting the parting surfaces (52) in a pressing tool (40), characterised in that the bearing shell sections (26) are cut from the strip material (2) using a lower blade (8, 10) having two cutting edges (22, 24) between which the punch (6) is passed.

2. Process according to claim 1, characterised in that the cutting edges (22, 24) of the lower blade (8, 10) used tend upwards in the direction of the punch (6) so that no burrs projecting beyond the underside (34) of the strip material (2) are formed on the lower side (34) of the strip material as viewed in the punching direction during shearing.

3. Process according to claim 1 or claim 2, characterised in that, during the upsetting of the parting surfaces (52), bevels are simultaneously formed in the region of the transition from the parting surfaces (52) to the inner faces of the bearing shells.

4. Process according to one of the preceding claims, characterised in that the bent bearing shell sections (26) are supported on both sides of their longitudinal direction in the bending press tool during the pressing process.

5. Process according to one of the preceding claims, characterised in that a radial lug (84) is notched into a recess (90) in the pressing tool (40) during upsetting.

6. Process according to claim 5, characterised in that, after the notching of the lug (84), the shell is rotated in such a manner by pressing on the parting surface (52) opposite the lug (84) that it comes out of the recess (90) in the pressing tool (40) and can be pushed out after opening of the pressing tool.

7. Process according to one of the preceding claims, characterised in that the oil groove (14) is milled before the strip material (2) is cut.

8. Process according to claim 7, characterised in that the bearing shell sections (26) are cut using a punch (6) having a shape complementary to the cross-sectional contour of the strip material (2) after the milling of the oil groove (14).

9. Process according to one of the preceding claims, characterised in that the oil hole is punched in a subsequent process step after the calibration of the outer face (88) and the parting surfaces (52) and before the calibration of the inner face (58).

10. Punching tool (4) and pressing tool (40) for the production of flat bearing shells for carrying out the process according to one or more of the preceding claims, comprising a pressing die (44) having the circumferential shape of the bearing shell to be produced and a pressing bridge (48) which can be raised and lowered relative to the pressing die (44) and has a bearing surface (54) which has a shape complementary to the respective shape of the parting surface (52) to be produced in the respective transition region from the parting surface (52) to the inner face (58) of the bearing shell and can be pressed against the parting surfaces (52) of a bearing shell (26) inserted into the pressing die (44), and comprising lateral tool flanks (60, 62) for supporting and defining the width of the bearing shell during the pressing process and comprising a punch (6) and a lower blade, characterised in that the lower blade has two cutting edges (22, 24) between which the punch (6) is passed.

11. Punching tool and pressing tool according to claim 10, characterised in that the cutting edges (22, 24) of the lower blade (8, 10) tend upwards in the direction of the punch (6) so that no burrs projecting beyond the underside (34) of the strip material (2) are formed on the lower side (34) of the strip material as viewed in the punching direction during shearing.

12. Punching tool and pressing tool according to claim 11, characterised in that at least one of the lateral tool flanks (60, 62) can be brought to bear against a lateral end face (70, 72) of the bearing shell.

13. Punching tool and pressing tool according to claim 10, 11 or 12, characterised by a feed slope (66) by means of which at least one of the lateral tool flanks (60, 62) can be brought to bear against a lateral end face (70, 72) of the bearing shell transversely to the adjusting direction of the pressing bridge (48).

14. Punching tool and pressing tool according to claim 13, characterised in that the lateral tool flanks (60, 62) are spring-loaded relative to an upper part (46) of the press raising and lowering the pressing bridge (48) in the adjusting direction of the pressing bridge.

15. Punching tool and pressing tool according to one of claims 10 to 14, characterised by a preliminary stage with a semi-circular bending punch for bending the bearing shell sections (26) cut from the strip material (2) into a semi-circular shape.

16. Punching tool and pressing tool according to claim 15, characterised by a shifting device for transferring the bent bearing shell section from the preliminary bending stage to the calibrating stage.

## Revendications

1. Procédé de fabrication de coquilles de coussinet plates, dans lequel des portions de coquilles de coussinet (26) sont découpées à partir d'une bande de matériau (2), ces portions sont cintrées de manière sensiblement semi-circulaire, et les faces externe et interne (88, 58) et les surfaces de séparation (52) de la coquille de coussinet ainsi formées sont calibrées, la face externe (88) ainsi que les surfaces de séparation (52) des portions de coquille de coussinet (26) cintrées selon une forme semi-circulaire étant calibrées par refoulement des surfaces de séparation (52) dans un outil de presse (40), caractérisé en ce que, pour découper les portions de coquille de coussinet (26) à partir de la bande de matériau (2), l'on utilise une lame inférieure (8, 10) présentant deux arêtes tranchantes (22, 24), entre lesquelles est guidé le poinçon de découpage (6).

2. Procédé selon la revendication 1, caractérisé en ce que les arêtes tranchantes (22, 24) de la lame inférieure employée (8, 10) sont orientées vers le haut, en direction du poinçon de découpage (6), de sorte que lorsque l'on coupe au niveau de la face inférieure (34) de la bande de matériau (2) (vu dans le sens de découpage), il ne se forme aucune bavure de découpage en saillie de la face inférieure (34) de la bande de matériau.

3. Procédé selon la revendication 1 ou 2, caractérisé en ce que lors du refoulement des surfaces de séparation (52), on refoule simultanément des chanfreins au niveau de la transition entre les surfaces de séparation (52) et la face interne des coquilles de coussinet.

4. Procédé selon l'une quelconque des revendications précédentes, caractérisé en ce que, pendant l'opération de presse, les portions de coquille de coussinet cintrées (26) sont maintenues sur les deux côtés longitudinaux dans l'outil de cintrage.

5. Procédé selon l'une quelconque des revendications précédentes, caractérisé en ce que lors du refoulement, un nez radial (84) est refoulé dans un évidement (90) de l'outil de presse (40).

6. Procédé selon la revendication 5, caractérisé en ce que, après refoulement du nez (84), la coquille est pivotée par pression sur la surface de séparation (52) opposée au nez (84), de telle sorte que ledit nez se dégage de l'évidement (90) de l'outil de presse (40) et que la coquille peut être extraite après ouverture dudit outil de presse.

7. Procédé selon l'une des revendications précédentes, caractérisé en ce que la rainure de graissage (14) est fraisée avant le découpage de la bande de matériau (2).

8. Procédé selon la revendication 7, caractérisé en ce que les portions de coquilles de coussinet (26) sont découpées au moyen d'un poinçon de découpage (6) dont la forme correspond au contour de la section transversale de la bande de matériau (2) après fraisage de la rainure de graissage (14).

9. Procédé selon l'une des revendications précédentes, caractérisé en ce que la lumière de coussinet est poinçonnée lors d'une étape ultérieure après calibrage de la face externe (88) et des surfaces de séparation (52) et avant calibrage de la face interne (58).

10. Outil de découpage (4) et outil de presse (40) pour la fabrication de coquilles de coussinet plates, destinés à mettre en oeuvre le procédé selon une ou plusieurs des revendications précédentes, avec une matrice (44) affectant la forme périphérique de la coquille de coussinet à fabriquer et un pontage de presse (48) apte à être relevé et abaissé par rapport à la matrice (44) et doté d'une surface d'appui de presse (54) dont la forme correspond à celle de la surface de séparation (52) à fabriquer dans la zone de transition correspondante entre les surfaces de séparation (52) et la face interne (58) de la coquille de coussinet, ladite surface d'appui de presse pouvant être pressée contre les surfaces de séparation (52) d'une coquille de coussinet (26) insérée dans la matrice (44), et avec des presse-flancs latéraux (60,62) pour maintenir et définir la largeur de la coquille de coussinet lors de l'opération de presse, et avec un poinçon de découpage (6) et une lame inférieure, caractérisés en ce que la lame inférieure présente deux arêtes tranchantes (22, 24) entre lesquelles est guidé le poinçon de découpage (6).

11. Outil de découpage et outil de presse selon la revendication 10, caractérisés en ce que les arêtes tranchantes (22, 24) de la,lame inférieure (8, 10) sont orientées vers le haut, en direction du poinçon de découpage (6), de sorte que lorsque l'on coupe au niveau de la face inférieure (34) de la bande de matériau (2) (vu dans le sens de découpage), il ne se forme aucune bavure de découpage en saillie de la face inférieure (34) de la bande de matériau.

12. Outil de découpage et outil de presse selon la revendication 11, caractérisés en ce qu'au moins un des presse-flancs latéraux (60, 62) peut être amené en contact avec une extrémité latérale (70, 72) de la coquille de coussinet.

13. Outil de découpage et outil de presse selon la revendication 10, 11 ou 12, caractérisés par un chanfrein de butée (66), au moyen duquel au moins un des presse-flancs latéraux (60, 62) peut être amené, perpendiculairement à la direction d'amenée du pontage de presse (48), en contact avec une extrémité latérale (70, 72) de la coquille de coussinet.

14. Outil de découpage et outil de presse selon la revendication 13, caractérisés en ce que les presse-flancs latéraux (60, 62) sont précontraints par un ressort dans la direction d'amenée du pontage de presse (48) contre une partie supérieure (46) de la presse qui soulève et abaisse le pontage de presse.

15. Outil de découpage et outil de presse selon l'une quelconque des revendications 10 à 14, caractérisés par un étage en amont avec un poinçon de formage semi-circulaire pour cintrer selon une forme semi-circulaire les portions de coquille de coussinet (26) découpées à partir de la bande de matériau (2).

16. Outil de découpage et outil de presse selon la revendication 15, caractérisés par un dispositif de déplacement permettant de déplacer la portion de coquille de coussinet cintrée de l'étage préalable de cintrage vers l'étage de calibrage.
